# EUROPEAN PATENT SPECIFICATION

(11) **EP 4 313 463 B1**
(45) Date of publication and mention of the grant of the patent: **18.12.2024**
(21) Application number: 22717663.3
(22) Date of filing: 25.03.2022
(51) Int. Cl.: B23K 9/16, B23K 9/23, B23K 35/00, B23K 35/30, B23K 9/167, B23K 35/38, B23K 103/12, B23K 103/22, B23K 9/173

(54) **PROCESS FOR WELDING COPPER COMPONENTS**
VERFAHREN ZUM SCHWEISSEN VON KUPFERBAUTEILEN
PROCÉDÉ DE SOUDAGE D'ÉLÉMENTS EN CUIVRE

(30) Priority: 25.03.2021 IT 202100007253
(43) Date of publication of application: 07.02.2024
(73) Proprietor: ATB RIVA CALZONI S.P.A., 25030 Roncadelle (BS) (IT)
(72) Inventor: VIELMI, Mattia, 25030 Roncadelle (BS) (IT)
(74) Representative: Studio Torta S.p.A.
(86) International application number: PCT/IB2022/052741
(87) International publication number: WO 2022/201109

(56) References cited:
- EP-B1- 1 066 911
- US-A1- 2014 263 191
- US-A1- 2020 306 854
- US-B1- 6 624 387
- US-B2- 10 213 878
- US-B2- 6 969 818

## Description

### Cross-Reference to Related Applications

This patent application claims priority of Italian Patent Application No. 102021000007253 filed on March 25, 2021

### Technical Field

The present invention relates to a process for welding copper components, in particular for welding copper sheets, pipes or other tubular profiles.

### State of the Art

Here and in the following, copper components (among which in particular sheets, pipes, tubular profiles) are also understood to be components made, besides of pure copper (commercially available with a copper concentration greater than 95% and higher), also of copper alloys (where the copper is present in an amount greater than any other element of the alloy and than the sum of all the other elements present).

As is known, in various industrial sectors it is necessary to weld together copper components, for example in the form of sheets (plates) or pipes (of any section and profile).

In particular, it is known to weld copper/copper sheets and pipes by means of gas-shielded arc welding processes using a metal filler (so-called GMAW - gas metal arc welding).

Document EP 1 066 911 B1 discloses a copper based filler material for welding.

Document US 10 213 878 B2 discloses a process for welding copper materials together and document US 2014/263191 A1 discloses a process for welding a copper based material to a stainless steel material.

In the known processes of this type, but also in other similar ones, it is known to use in particular a welding material selected from the copper-silicon alloys; and to operate with a shielding gas consisting of a mixture of inert gases, in particular helium and argon with a relatively high content of argon, for example a mixture of 70% He and 30% Ar.

In all cases, it is common knowledge that, in order to weld copper components (both with each other and with another metal component), in particular for making full penetration joints, it is necessary to pre-heat the components to be welded, at temperatures of at least 250°C. For example, the guidelines of the Italian Welding Institute (IIS) suggest a pre-heating at about 300-350°C.

Therefore, the traditional processes for welding copper components and sheets require the pre-heating of the workpieces to be welded.

Therefore, the known welding processes are not without drawbacks, firstly because they require pre-heating the workpieces to be welded.

Moreover, although generally efficient, the known processes can sometimes be not fully satisfactory in terms of welding quality.

### Subject of the Invention

Therefore, one object of the present invention is to provide a process for welding copper components, in particular copper sheets and tubular profiles, which is devoid of the drawbacks highlighted herein of the prior art.

The present invention thus relates to a process for welding copper components, in particular copper sheets and tubular profiles, as defined in the appended claim 1.

Preferred additional features of the invention are indicated in the dependent claims.

The invention provides a welding process which allows performing the welding of copper components, sheets and pipes and tubular profiles in general at room temperature, without pre-heating the workpieces.

In accordance with the invention, in fact, it is not necessary to pre-heat the workpieces to be welded but it is possible to proceed with the welding at room temperature, anyway obtaining a high quality joint compliant with the requirements provided for by the main standards of the sector.

In fact, it has been surprisingly observed that, by operating with certain specific filler materials and specific shielding gases, it is possible to perform the welding of the copper workpieces at room temperature, without thus resorting to any pre-heating treatment.

In accordance with the invention, the shielding gas consists of helium only (100% helium), or is a mixture containing helium in an amount equal to or greater than 90% in volume, preferably equal to or greater than 95% in volume and more preferably equal to or greater than 98% in volume, together with one or more other inert gases, for example argon, or oxygen or carbon dioxide, also in a mixture with each other.

In a preferred embodiment, the shielding gas consists of helium only (100% helium).

The use of a high percentage of helium in the shielding gas not only improves weldability, so contributing to avoid the pre-heating of the workpieces to be welded; but also ensures full penetration.

The filler material is a copper-aluminum alloy containing aluminum in an amount ranging between 5 and 10% in weight, preferably ranging between 7 and 9% in weight, in particular about 8% in weight.

The welding step can be carried out with various techniques. In general, the welding step is an arc welding step.

Preferably, especially in case it is necessary to make a full penetration joint, the welding step is a gas metal arc welding step.

The welding step is suitably preceded by a beveling step, in which the edges of the components to be welded are suitably shaped.

The process of the invention can anyway be implemented with different forms of bevel, and also with a different number of passes if they are necessary, also depending on the geometry of the joint and on the volume to be filled.

The process of the invention is particularly suitable for making copper/copper welds, but is also suitable for the welding between copper and stainless steel.

Preferably, the process for the copper/copper welding is a process of GMAW type, i.e. a Gas Metal Arc Welding process.

In the case of welding between copper and another metal, preference can be instead given to a TIG (tungsten inert gas) or GTAW (gas tungsten arc welding) welding process, i.e. an Inert Gas Tungsten Arc Welding process.

### Brief Description of the Drawings

Further characteristics and advantages of the present invention will become apparent from the description of the following non-limiting example embodiments, with reference to the figures of the accompanying drawings, wherein:
- Figure 1A is a schematic sectional view of two components provided for being welded by means of the process of the invention;
- Figure 1B is a schematic sectional view of the components of Figure 1A after the welding by means of the process of the invention;

- Figure 2A is a schematic sectional view of two other components provided for being welded by means of the process of the invention;
- Figure 2B is a schematic sectional view of the components of Figure 2A after the welding by means of the process of the invention;
- Figure 3 is a schematic sectional view of two other components welded by means of the process of the invention;
- Figures 4A to 4G are respective images of samples of joints welded by means of the process of the invention.

### Detailed Description of Preferred Embodiment of the Invention

### EXAMPLES

A series of test samples were provided, welded and controlled in accordance with standards UNI EN ISO 15613 Ed. 2005.

In particular, various samples of copper and other metal (in particular, stainless steel) components were provided to be welded together (by welding a copper component to another copper component or to an other metal material component) .

In particular, a series of samples was prepared, made of copper alloy C10200 H02 (ASTM B152-13) .

Samples were prepared in order to make both full penetration and partial penetration butt joints and T-joints.

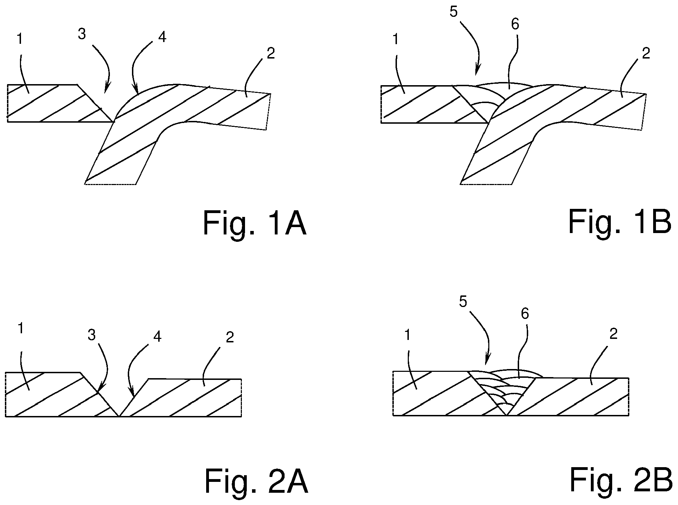

The samples were then shaped in a beveling step so as to define joints having various typical forms, as shown for example in Figures 1A and 2A.

Figures 1A and 2A each show a first component 1 and a second component 2 having respective edges 3, 4 facing each other. One or both components 1, 2 are made of copper or copper alloy.

The samples were then welded by means of the process of the invention, using a filler material and a shielding gas as defined above, obtaining the joints 5 schematically shown in Figures 2A, 2B, where the edges 3, 4 are joined by a welding bead 6.

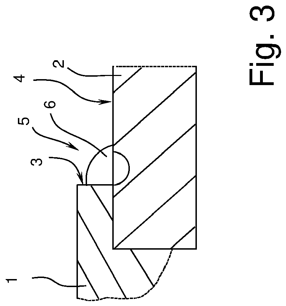

A further example is schematically shown in Figure 3, where the components 1, 2 having respective edges 3, 4 are angle-placed (the so-called fillet weld).

In particular, filler materials consisting of copper-aluminum alloys with aluminum content of 5%, 6%, 7%, 8%, 9%, 10% in weight were employed.

For example, a material with the designation ER CuAl-A1 and similar materials with a different content of aluminum were used.

As shielding gas, helium (100% helium) was used; or a mixture of helium and argon with a content of helium equal to 90%, 92%, 95%, 98%, 99% in volume; or a mixture of helium and one or more other gases (inert gases, CO2, O2) always with helium greater than at least 90% in volume.

Depending on the shape and on the size of the joint, the welding step was carried out in one or more passes. For example, in the example of Figure 1B, 3 passes were carried out; in the example of Figure 2B, 9 passes were carried out.

All the tests were carried out without pre-heating the components to be welded, i.e. at room temperature (about 20°C).

Various experimental tests were then carried out in order to verify the quality of the obtained joints, in accordance with the standards of reference and in particular with standards UNI EN ISO 15613 Ed. 2005.

All the samples passed the tests and were thus found to be compliant with the requirements provided for by such standards.

Tests were performed both on joints obtained between two components which were both made of copper (or copper alloy) and on joints between a copper component (or copper alloy) and a stainless steel component.

The copper/copper welding was preferably carried out with GMAW technique; the welding between copper components and other metal (stainless steel) components was carried out with GTAW technique.

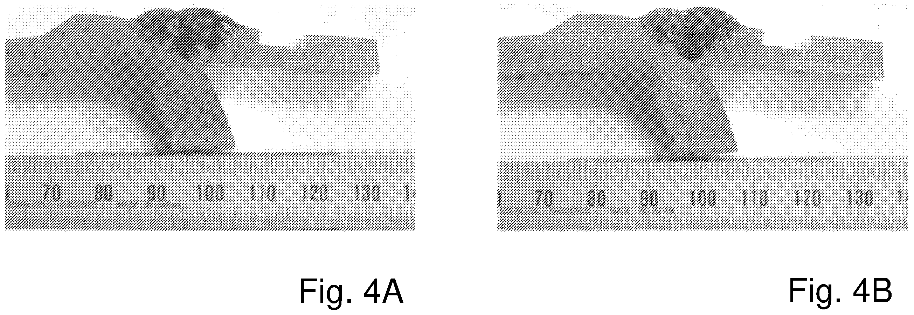

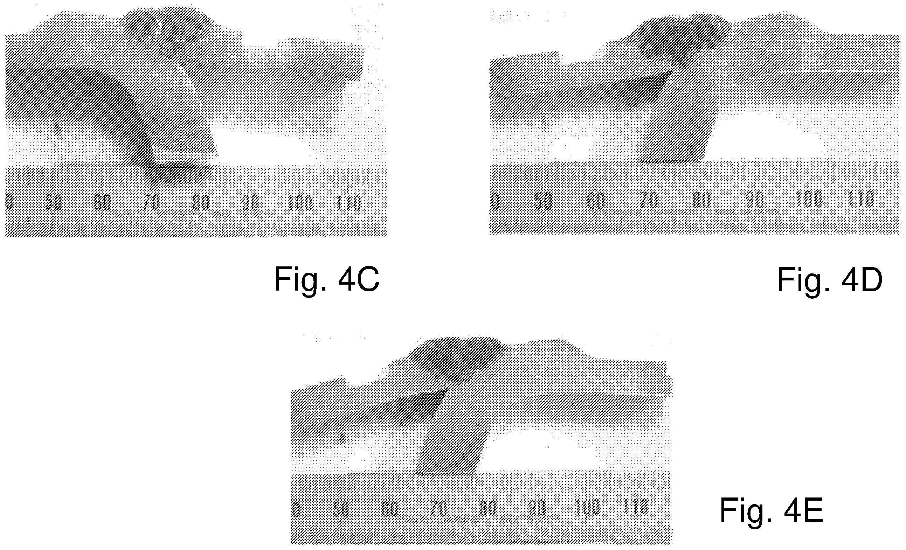

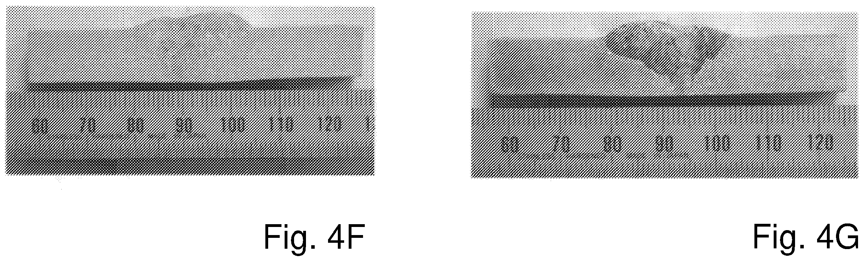

The images of Figures 4A-4G are macrographic images of some of the samples subjected to analysis, all of which were found to be compliant with the standards.

For the purposes of comparison, comparative tests were carried out by welding samples entirely similar to the previous ones, but operating with filler materials and shielding gases according to the prior art. In all these cases, the welding carried out at room temperature, with no pre-heating of the workpieces, proved to be ineffective, failing to pass the qualification tests provided for by the cited standard of reference.

Only by operating in accordance with the process of the invention was it possible to pass the tests while operating at room temperature and without performing the pre-heating of the workpieces.

Finally, it is understood that the process described and illustrated herein can be subjected to further modifications and variations which do not depart from the scope of the appended claims.

## Claims

1. A process for welding copper components, selected from copper sheets and copper tubular profiles, comprising the steps of: providing a first component and a second component with respective edges facing each other, the first component being a component made of copper or copper alloy and the second component being a component made of copper or copper alloy or stainless steel; welding said edges by addition of a filler material and under protection of a shielding gas by Gas Metal Arc Welding (GMAW), or by Gas Tungsten Arc Welding (GTAW); the process being **characterized in that** the components are not pre-heated before the welding step; and **in that** the filler material is a copper-aluminum alloy containing aluminum in an amount ranging between 7 and 10% in weight, and the shielding gas contains helium in an amount greater than or equal to 90% in volume.

2. A process according to claim 1, wherein the welding step is carried out at room temperature.

3. A process according to claim 1 or 2, wherein the filler material is a copper-aluminum alloy containing aluminum in an amount ranging between 7 and 9% in weight, preferably about 8% in weight.

4. A process according to one of claims 1 to 3, wherein the shielding gas entirely consists of helium.

5. A process according to one of claims 1 to 3, wherein the shielding gas contains helium in an amount greater than or equal to 95% in volume, in a mixture with at least another gas.

6. A process according to claim 5, wherein the shielding gas contains helium in an amount greater than or equal to 98% in volume.

7. A process according to claim 5 or 6, wherein the shielding gas contains helium and at least another gas selected from inert gases, oxygen, carbon dioxide, mixtures thereof.

8. A process according to one of the preceding claims, wherein also the second component is a component made of copper or copper alloy.

9. A process according to one of the preceding claims, wherein the components are arranged for a butt welding.

10. A process according to one of the preceding claims, comprising a step of beveling, in which the edges are shaped to define a full penetration joint.

## Patentansprüche

1. Verfahren zum Schweißen von Kupferbauteilen, ausgewählt aus Kupferblechen und Kupferrohrprofilen, umfassend die Schritte: Bereitstellen eines ersten Bauteils und eines zweiten Bauteils mit jeweils einander gegenüberliegenden Kanten, wobei das erste Bauteil ein Bauteil aus Kupfer oder einer Kupferlegierung und das zweite Bauteil ein Bauteil aus Kupfer oder Kupferlegierung oder rostfreiem Stahl ist; Verschweißen dieser Kanten durch Zugabe eines Zusatzwerkstoffs und unter Schutz eines Schutzgases durch Metall-Inertgasschweißen (GMSG) oder durch Wolfram-Inertgas-Lichtbogenschweißen (GTAW); wobei das Verfahren **dadurch gekennzeichnet ist, dass** die Bauteile vor dem Schweißschritt nicht vorgewärmt werden; und dass der Zusatzwerkstoff eine Kupfer-Aluminium-Legierung ist, die Aluminium in einer Menge zwischen 7 und 10 Gew.-% enthält, und das Schutzgas Helium in einer Menge von mindestens 90 Vol.-% enthält.

2. Verfahren nach Anspruch 1, wobei der Schweißschritt bei Raumtemperatur durchgeführt wird.

3. Verfahren nach Anspruch 1 oder 2, wobei der Zusatzwerkstoff eine Kupfer-Aluminium-Legierung ist, die Aluminium in einer Menge zwischen 7 und 9 Gew.-%, vorzugsweise etwa 8 Gew.-% enthält.

4. Verfahren nach einem der Ansprüche 1 bis 3, wobei das Schutzgas vollständig aus Helium besteht.

5. Verfahren nach einem der Ansprüche 1 bis 3, wobei das Schutzgas Helium in einer Volumenmenge von mindestens 95 Vol.-% in einem Gemisch mit mindestens einem anderen Gas enthält.

6. Verfahren nach Anspruch 5, wobei das Schutzgas Helium in einer Menge größer/gleich 98 Vol.-% enthält.

7. Verfahren nach Anspruch 5 oder 6, wobei das Schutzgas Helium und mindestens ein weiteres Gas enthält, ausgewählt aus Inertgasen, Sauerstoff, Kohlendioxid, Mischungen davon.

8. Verfahren nach einem der vorhergehenden Ansprüche, wobei auch das zweite Bauteil ein Bauteil aus Kupfer oder Kupferlegierung ist.

9. Verfahren nach einem der vorhergehenden Ansprüche, wobei die Bauteile für ein Stumpfschweißen angeordnet sind.

10. Verfahren nach einem der vorhergehenden Ansprüche, umfassend einen Schritt des Anschrägens, bei dem die Kanten so geformt sind, dass sie eine vollständige Durchdringungsverbindung definieren.

## Revendications

1. Un procédé de soudage d'éléments en cuivre, sélectionnés parmi des feuilles de cuivre et des profilés tubulaires en cuivre, comprenant les étapes de : fourniture d'un premier élément et d'un deuxième élément avec des bords respectifs se faisant face, le premier élément étant un élément constitué de cuivre ou d'alliage de cuivre et le deuxième élément étant un élément constitué de cuivre ou d'alliage de cuivre ou d'acier inoxydable ; le soudage desdits bords par ajout de matériau d'apport et sous protection d'un gaz de protection par soudage à l'arc en atmosphère active (GMAW), ou par soudage à l'arc en atmosphère inerte avec électrode de tungstène (GTAW) ; le procédé étant **caractérisé en ce que** les éléments ne sont pas préchauffés avant l'étape de soudage ; et **en ce que** le matériau d'apport est un alliage de cuivre-aluminium contenant de l'aluminium en une quantité comprise entre 7 et 10 % en poids, et le gaz de protection contient de l'hélium en une quantité supérieure ou égale à 90 % en volume.

2. Un procédé selon la revendication 1, dans lequel l'étape de soudage est réalisée à température ambiante.

3. Un procédé selon la revendication 1 ou 2, dans lequel le matériau d'apport est un alliage de cuivre-aluminium contenant de l'aluminium en une quantité comprise entre 7 et 9 % en poids, de préférence d'environ 8 % en poids.

4. Un procédé selon l'une des revendications 1 à 3, dans lequel le gaz de protection consiste entièrement en hélium.

5. Un procédé selon l'une des revendications 1 à 3, dans lequel le gaz de protection contient de l'hélium en une quantité supérieure ou égale à 95 % en volume, dans un mélange avec au moins un autre gaz.

6. Un procédé selon la revendication 5, dans lequel le gaz de protection contient de l'hélium en une quantité supérieure ou égale à 98 % en volume.

7. Un procédé selon la revendication 5 ou 6, dans lequel le gaz de protection contient de l'hélium et au moins un autre gaz sélectionné parmi gaz inertes, oxygène, dioxyde de carbone, mélanges de ceux-ci.

8. Un procédé selon l'une des revendications précédentes, dans lequel le deuxième élément est également un élément constitué de cuivre ou d'alliage de cuivre.

9. Un procédé selon l'une des revendications précédentes, dans lequel les éléments sont agencés pour un soudage bout à bout.

10. Un procédé selon l'une des revendications précédentes, comprenant une étape de chanfreinage, dans laquelle les bords sont profilés pour définir un joint à pénétration complète.
